# EUROPEAN PATENT APPLICATION

(11) **EP 2 789 497 A2**
(43) Date of publication of application: **15.10.2014**
(21) Application number: 13168315.3
(22) Date of filing: 17.05.2013
(51) Int. Cl.: B60L 11/18

(54) **Charging system and charging method for use in electric vehicle**

(30) Priority: 21.02.2013 TW 102105981
(71) Applicant: Delta Electronics, Inc., Taoyuan Hsien 333 (TW)
(72) Inventor: Jiang, Ming-Yu, Chungli Industrial Zone Taoyuan Hsien 320 (TW)
(74) Representative: 2K Patentanwälte Blasberg Kewitz & Reichel

(57) **Abstract**

A charging system includes a charging station 10. The charging station 10 includes a charging unit 100, an input unit 101, a first communication interface 102, and a controlling unit 103. The input unit 101 receives a model number message and a destination of an electric vehicle 9. The first communication interface 102 receives a residual energy quantity message and an acceptable energy message of a chargeable battery 90 of the electric vehicle 9. By comparing the model number message and the destination with a database, a type of the chargeable battery 90 and a travelable path are realized. The chargeable battery 90 is charged according to the type of the chargeable battery 90, the travelable path and the residual energy quantity message until a residual energy quantity of the chargeable battery 90 is equal to an estimated energy quantity required to drive the electric vehicle 9 to the destination along the travelable path.

## Description

### FIELD OF THE INVENTION

The present invention relates to a charging system and a charging method, and more particularly to a charging system and a charging method for determining a time period of charging an electric vehicle according to the travel distance of the electric vehicle.

### BACKGROUND OF THE INVENTION

Gasoline-powered vehicles are widely used for transportation and become indispensible to our daily lives. With rapid development of the related technologies, mass production of gasoline-powered vehicles brings convenience to the human beings. The total number of gasoline-powered vehicles in the world is about 850 millions at present. In addition, 57% of the world's oil consumption (or 67% of the United State's oil consumption) lies in the transportation sector. It is estimated that the total number of gasoline-powered vehicles in the world is about 1.2 billion in 2020. Since there is a net gap between the global oil demand and the oil supply, the unbalance between supply and demand of petroleum energy has become increasingly prominent. It is estimated that the net gap between the global oil demand and the oil supply in 2050 is nearly twice the world's oil production quantity. Consequently, the oil price is rapidly increased, and the operating cost of the vehicle becomes higher and higher. Nowadays, many countries are actively encouraging the development of new energy vehicles in order to reduce the dependence on oil.

Furthermore, during operations of the gasoline-powered vehicles, the burning of the gasoline may cause air pollution problem and serious environmental problem. For protecting the environment, the manufacturers of vehicles are devoted to the development and research of low pollution vehicles. Among various kinds of new energy vehicles, electric vehicles (EV) are more advantageous because of the well-established technologies. In addition, since the power net is widespread over the world, it is convenient to acquire the stable electric energy. As a consequence, electric vehicles (EV) are more important in the development of new energy vehicles.

As known, a charging apparatus such as a charging station is used to provide electric energy to the electric vehicle. According to the current battery charging technology, the time period of charging the electric vehicle is about 20∼30 minutes or even longer than 10 hours. The actual charging time period is dependent on the type of the electric vehicle and the type of the charging apparatus. However, the driver of the electric vehicle or the operator of the charging apparatus may feel that the time period of charging the electric vehicle is relatively longer than the time period of filling gasoline in the gasoline-powered vehicle. Consequently, the manufacturers and the operators of the charging apparatuses make efforts in shortening the charging time of the charging apparatuses.

Conventionally, the electric vehicle is responsible for determining whether the charging task needs to be ended or not. However, the driver fails to change the settings of the charging task of the electric vehicle. Generally, the charging task is ended when the residual energy quantity of the chargeable battery of the electric vehicle is higher than 80%. Since the driving habits of the driver is not taken into consideration, the time period of charging the electric vehicle is much more than what is needed.

Moreover, some kinds of electric vehicles or some kinds of charging apparatuses provide the function of allowing the drivers to set the charging time before the charging task is started. However, since the real condition of using the electric vehicle and the current residual energy quantity of the chargeable battery of the electric vehicle are not taken into consideration, the preset time period of charging the electric vehicle is usually more than what is needed.

Therefore, there is a need of providing a charging system and a charging method for determining a time period of charging an electric vehicle according to the travel distance of the electric vehicle in order to eliminate the above drawbacks.

### SUMMARY OF THE INVENTION

The present invention provides a charging system and a charging method for determining a time period charging of an electric vehicle according to the travel distance of the electric vehicle.

In accordance with an aspect of the present invention, there is provided a charging system. The charging system includes a charging station for charging a chargeable battery of an electric vehicle. The charging station includes a charging unit, an input unit, a first communication interface, and a controlling unit. The charging unit is used for providing a charging energy to the chargeable battery. The input unit is used for selectively receiving a model number message of the electric vehicle and a destination of driving the electric vehicle. The first communication interface is in communication with the electric vehicle for receiving a residual energy quantity message and an acceptable energy message of the chargeable battery from the electric vehicle at any time. The controlling unit is electrically connected with the charging unit for controlling operations of the charging unit, and connected with the input unit and the first communication interface. By comparing the model number message and the destination with a database, the controlling unit realizes a type of the chargeable battery and a travelable path of the electric vehicle from the charging station to the destination. The controlling unit controls the charging unit to charge the chargeable battery according to the type of the chargeable battery, the travelable path and the residual energy quantity message until a residual energy quantity of the chargeable battery is equal to an estimated energy quantity required to drive the electric vehicle to the destination along the travelable path. During the chargeable battery is charged by the charging unit, a magnitude of the charging energy is dynamically adjusted by the controlling unit according to the acceptable energy message.

In accordance with another aspect of the present invention, there is provided a charging method for use in a charging system. The charging system includes a charging station for charging a chargeable battery of an electric vehicle. The charging method includes the following steps. Firstly, in a step (a), a model number message and a destination of the electric vehicle are received, and a residual energy quantity message and an acceptable energy message of the chargeable battery are received. Then, in a step (b), the model number message and the destination are compared with a database, so that a type of the chargeable battery and a travelable path of the electric vehicle from the charging station to the destination are realized. Then, in a step (c), the chargeable battery is charged by the charging station according to the type of the chargeable battery, the travelable path and the residual energy quantity message. During the chargeable battery is charged by the charging station, a magnitude of a charging energy provided to the chargeable battery is dynamically adjusted according to the acceptable energy message. Then, a step (d) is performed to judge whether a residual energy quantity of the chargeable battery is equal to an estimated energy quantity required to drive the electric vehicle to the destination along the travelable path. Then, in a step (e), if the residual energy quantity of the chargeable battery is equal to the estimated energy quantity required to drive the electric vehicle to the destination along the travelable path, the chargeable battery is no longer charged by the charging station. If the residual energy quantity of the chargeable battery is lower than the estimated energy quantity required to drive the electric vehicle to the destination along the travelable path, the step (c) is performed again.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic circuit block diagram illustrating the architecture of a charging system for an electric vehicle according to an embodiment of the present invention;

FIG. 2 is a schematic circuit block diagram illustrating the architecture of a charging system for an electric vehicle according to another embodiment of the present invention; and

FIG. 3 is a schematic flowchart illustrating a charging method applied to the charging system of FIG. 1 or FIG. 2.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

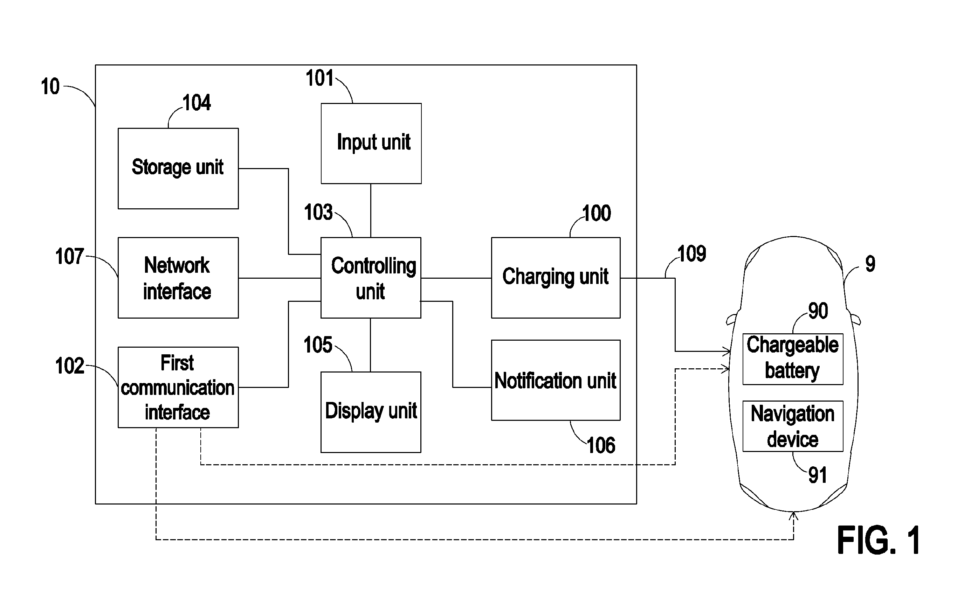

FIG. 1 is a schematic circuit block diagram illustrating the architecture of a charging system for an electric vehicle according to an embodiment of the present invention. The charging system is used for charging a chargeable battery 90 of the electric vehicle 9. The chargeable battery 90 can provide electric energy for operating and driving the electric vehicle 9. The type of the chargeable battery 90 is determined according to the model number message of the electric vehicle 9. In other words, different chargeable batteries 90 have different properties.

The charging system comprises at least one charging station 10. Through a charging gun assembly 109 including a charging gun (not shown) and a cable (not shown), the charging station 10 can provide electric energy to the electric vehicle 9 in order to charge the electric vehicle 9. As shown in FIG. 1, the charging station 10 comprises a charging unit 100, an input unit 101, a first communication interface 102, and a controlling unit 103. The charging unit 100 is electrically connected with the charging gun assembly 109. In addition, the charging unit 100 is electrically connected with the electric vehicle 9 through the charging gun assembly 109. An example of the charging unit 100 includes but is not limited to a power converting circuit (not shown). The charging unit 100 is used for converting an input power (not shown) into a regulated charging energy (e.g. a charging voltage and/or a charging current), thereby charging the chargeable battery 90 of the electric vehicle 9.

Via the input unit 101 of the charging station 10, a model number message of the electric vehicle 9 and a destination of driving the electric vehicle 9 may selectively inputted by the driver of the electric vehicle 9. An example of the input unit 101 includes but is not limited to a keyboard or a touch screen for allowing the user to input associated message. Alternatively, in some other embodiments, the input unit 101 further comprises an IC card reader for reading an IC card of the driver. Consequently, the charging station 10 of the charging system can realize associated message about the driver or the electric vehicle 9 (e.g. the model number message of the electric vehicle 9) and/or collect the charging fees from the IC card.

The first communication interface 102 is electrically connected with the controlling unit 103. Moreover, the first communication interface 102 is in communication with the electric vehicle 9. When the electric vehicle 9 is charged by the charging station 10, the first communication interface 102 may receive a residual energy quantity message of the chargeable battery 90 and an acceptable energy message of the chargeable battery 90 from the electric vehicle 9 automatically and at any time. The acceptable energy message complies with the communication protocols of the electric vehicle 9. Moreover, the acceptable energy message varies with the residual energy quantity of the chargeable battery 90. The acceptable energy message indicates the maximum chargeable electric energy corresponding to the current residual energy quantity of the chargeable battery 90. That is, the acceptable energy message indicates the maximum charging voltage and/or the maximum charging current corresponding to the current residual energy quantity of the chargeable battery 90. An example of the first communication interface 102 is a wireless communication interface. Consequently, the first communication interface 102 is in communication with the electric vehicle 9 by a wireless communication technology (e.g. a Wi-Fi wireless networking technology). Alternatively, in some other embodiments, the first communication interface 102 is a wired communication interface, and the first communication interface 102 is in communication with the electric vehicle 9 through a cable of the charging gun assembly 109.

An example of the controlling unit 103 includes but is not limited to a microcontroller (MCU). The controlling unit 103 is in communication with the charging unit 100 for controlling operations of the charging unit 100, so that the charging unit 100 outputs the electric energy to charge the chargeable battery 90. Moreover, the controlling unit 103 is also connected with the input unit 101 and the first communication interface 102. Consequently, the model number message of the electric vehicle 9 and the destination may be transmitted from the input unit 101 to the controlling unit 103, and the residual energy quantity message and the acceptable energy message may be transmitted from the first communication interface 102 to the controlling unit 103. Moreover, the controlling unit 103 may compare the model number message of the electric vehicle 9 and the destination with a database. According to the comparison between the model number message of the electric vehicle 9 and the database, the controlling unit 103 can realize the type of the chargeable battery 90 of the electric vehicle 9. Moreover, according to the comparison between the destination and the database, the controlling unit 103 can realize a travelable path of the electric vehicle 9 from the charging station 10 to the destination. Then, according to the type of the chargeable battery 90, the travelable path and the residual energy quantity message of the chargeable battery 90, the controlling unit 103 may calculate the charging time period required to drive the electric vehicle 9 to the destination along the travelable path. After the charging time period is obtained, the controlling unit 103 will control the charging unit 100 to charge the chargeable battery 90. Consequently, the chargeable battery 90 is charged by the charging unit 100 until the residual energy quantity of the chargeable battery 90 is equal to the estimated energy quantity required to drive the electric vehicle 9 to the destination along the travelable path. Moreover, during the process of charging the chargeable battery 90, the magnitude of the regulated charging energy (e.g. the charging voltage and/or the charging current) outputted from the charging unit 100 is dynamically adjusted by the controlling unit 103 according to the acceptable energy message. That is, according to the maximum charging voltage and/or the maximum charging current corresponding to the current residual energy quantity of the chargeable battery 90, the magnitude of the charging voltage and/or the charging current is adjusted by the controlling unit 103 at any time.

In some embodiments, the database contains the data about a navigation map and the chargeable batteries corresponding to various model numbers of electric vehicles. The data contained in the database are not limited to those mentioned above. That is, the data contained in the database may be varied or added according to the practical requirements of the charging station 10. Moreover, as shown in FIG. 1, the charging station 10 further comprises a storage unit 104. The storage unit 104 is electrically connected with the controlling unit 103 for storing the database, so that associated messages can be compared with the database by the controlling unit 103.

In some embodiments, the charging station 10 further comprises a display unit 105 and a notification unit 106. The display unit 105 is electrically connected with the controlling unit 103. An example of the display unit 105 includes but is not limited to a liquid display panel. When the model number message of the electric vehicle 9 and the destination of driving the electric vehicle 9 are received by the input unit 101, the model number message of the electric vehicle 9 and the destination of driving the electric vehicle 9 are simultaneously shown on the display unit 105 by the controlling unit 103. The notification unit 106 is electrically connected with the controlling unit 103. When the residual energy quantity of the chargeable battery 90 is equal to or larger than the estimated energy quantity required to drive the electric vehicle 9 to the destination along the travelable path, the charging task on the electric vehicle 9 is completed. Under this circumstance, the notification unit 106 issues a notification signal (e.g. a prompt sound or a light beam) to notify the driver that the charging task is ended. An example of the notification unit 106 includes but is not limited to a speaker and/or a light-emitting element.

Hereinafter, the operations of the charging system of the present invention will be illustrated in more details. Please refer to FIG. 1 again. If the driver wants to drive the electric vehicle 9 to a destination (e.g. at a first location), the electric vehicle 9 should be charged by the charging station 10 of the charging system (e.g. at a second location). Via the input unit 101 of the charging station 10, the driver of the electric vehicle 9 may input a model number message of the electric vehicle 9 and the destination (i.e. the first location). Moreover, by the controlling unit 103, the model number message of the electric vehicle 9 and the destination from the input unit 101 are compared with the database. Consequently, he type of the chargeable battery 90 of the electric vehicle 9 and the travelable path of the electric vehicle 9 from the charging station 10 (i.e. the second location) to the destination (i.e. the first location) are realized by the controlling unit 103. Then, according to the type of the chargeable battery 90, the travelable path and the residual energy quantity message (e.g. the current residual energy quantity is 30%) of the chargeable battery 90, the controlling unit 103 may calculate the charging time period required to charge the chargeable battery 90 to drive the electric vehicle 9 to the destination (i.e. the first location) along the travelable path. For example, the controlling unit 103 may calculate that the estimated energy quantity required to drive the electric vehicle 9 to the destination along the travelable path is 50%. Consequently, under control of the controlling unit 103, the chargeable battery 90 is charged by the charging unit 100 until the residual energy quantity of the chargeable battery 90 is equal to 50%. Moreover, during the process of charging the chargeable battery 90, the maximum electric energy that can be withstood by the chargeable battery 90 is continuously changed with the residual energy quantity. Consequently, during the process of charging the chargeable battery 90, the magnitude of the regulated charging energy (e.g. the charging voltage and/or the charging current) outputted from the charging unit 100 is dynamically adjusted by the controlling unit 103 according to the acceptable energy message from the first communication interface 102. That is, according to the maximum charging voltage and/or the maximum charging current corresponding to the current residual energy quantity of the chargeable battery 90, the magnitude of the charging voltage and/or the charging current is adjusted by the controlling unit 103 at any time. From the above discussions, the charging system of the present invention is capable of determining the time period of charging the electric vehicle according to the estimated energy quantity required to drive the electric vehicle 9 to the destination along the travelable path. When the residual energy quantity of the chargeable battery 90 is equal to estimated energy quantity required to drive the electric vehicle 9 to the destination along the travelable path, the charging task is ended. As previously described in the prior art, the charging task is ended when the residual energy quantity of the chargeable battery of the electric vehicle is higher than 80%, or the time period of charging the electric vehicle is set by the driver. In comparison with the prior art, the charging system of the present invention determines the time period of charging the electric vehicle according to the estimated energy quantity required to drive the electric vehicle 9 to the destination along the travelable path. Consequently, the time period of charging the electric vehicle is reduced and substantially equal to what is actually needed.

In some embodiments, there are plural paths for allowing the electric vehicle 9 to drive from the charging station 10 to the destination, wherein the distance of these travelable paths are different. Regardless of which travelable path is selected, after the chargeable battery 90 of the electric vehicle 9 is charged by the charging station 10, the residual energy quantity of the chargeable battery 90 should be sufficient. For achieving this purpose, when the destination of the electric vehicle 9 is compared with the database by the controlling unit 103 of the charging station 10, the travelable path of the electric vehicle 9 from the charging station 10 to the destination is the path having the farthest distance from the charging station 10.

In some embodiments, the first communication interface 102 is further in communication with a navigation device 91 of the electric vehicle 9. Via the navigation device 91, the driver of the electric vehicle 9 may directly input the model number message of the electric vehicle 9 and the destination of driving the electric vehicle 9. Moreover, the navigation device 91 is in communication with the first communication interface 102. Through the first communication interface 102, the model number message of the electric vehicle 9 and the destination may be transmitted from the navigation device 91 to the controlling unit 103. Consequently, the controlling unit 103 performs subsequent actions.

In some embodiments, as shown in FIG. 1, the charging station 10 of the charging system further comprises a network interface 107. The network interface 107 is electrically connected with the controlling unit 103, and has the function of implementing network communication. Before the electric vehicle 9 arrives at the charging station 10, the model number message of the electric vehicle 9 and the destination of driving the electric vehicle 9 may be transmitted from a user device (e.g. a computer or a mobile phone) to the controlling unit 103 through the network interface 107 via network connection in order to make an appointment. When the electric vehicle 9 arrives at the charging station 10, the above charging method may be performed to charge the electric vehicle 9. Since the step of inputting the model number message of the electric vehicle 9 and a destination of driving the electric vehicle 9 is omitted, the overall time period of charging the electric vehicle 9 is further reduced.

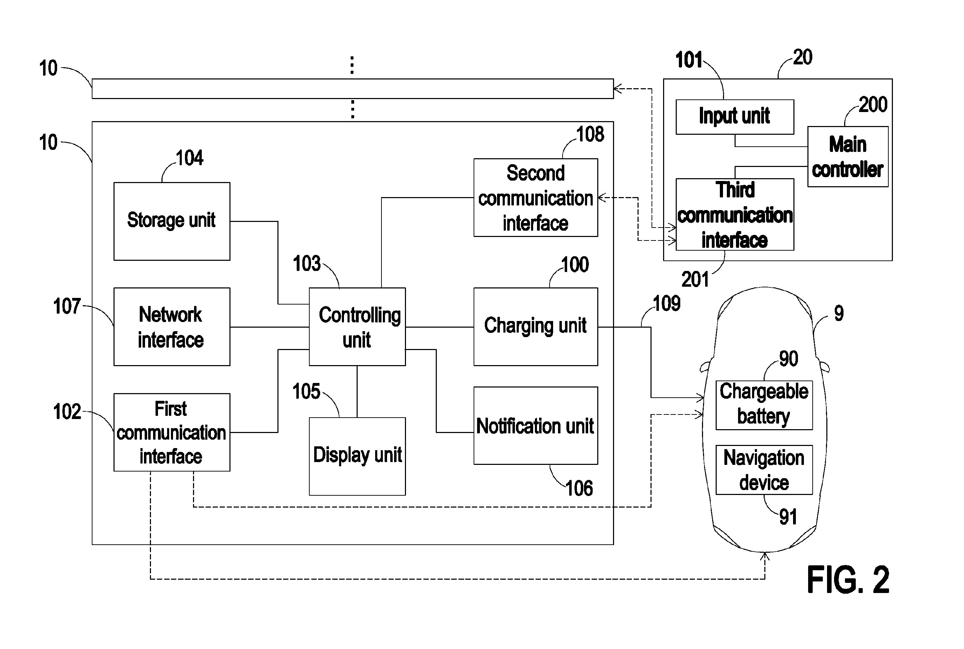

FIG. 2 is a schematic circuit block diagram illustrating the architecture of a charging system for an electric vehicle according to another embodiment of the present invention. The architecture of the charging system as shown in FIG. 2 is similar to the architecture of the charging system as shown in FIG. 1. In FIG. 2, the component parts and elements of FIG. 2 corresponding to those of FIG. 1 are designated by identical numeral references, and detailed description thereof is omitted.

As shown in FIG. 2, the charging system comprises plural charging stations 10 for charging plural electric vehicles 9. Moreover, the charging system further comprises a management device 20 for remotely controlling the operations of the plural charging stations 10. The management device 20 comprises a main controller 200 for controlling the operations of the management device 20. Moreover, the input unit 101 is included in the management device 20 instead of being included the charging stations 10. The input unit 101 is electrically connected with the main controller 200. Via the input unit 101 of the management device 20, the driver of the electric vehicle 9 may selectively input a model number message of the electric vehicle 9 and a destination of driving the electric vehicle 9. Moreover, the charging station 10 further comprises a second communication interface 108. The second communication interface 108 is electrically connected with the controlling unit 103. The management device 20 further comprises a third communication interface 201. The third communication interface 201 is electrically connected with the main controller 200 and the input unit 101. The third communication interface 201 is further in communication with the second communication interface 108. The model number message of the electric vehicle 9 and the destination of driving the electric vehicle 9 may be transmitted from the management device 20 to the controlling unit 103 of the charging station 10 through the third communication interface 201 and the second communication interface 108. Consequently, the controlling unit 103 performs the subsequent actions as described in FIG. 1.

In some embodiments, the second communication interface 108 and the third communication interface 201 are wireless communication interfaces. Consequently, the second communication interface 108 and the third communication interface 201 are in communication with each other by a wireless communication technology (e.g. a Wi-Fi wireless networking technology). Alternatively, in some other embodiments, the second communication interface 108 and the third communication interface 201 are wired communication interfaces, and the second communication interface 108 and the third communication interface 201 are in communication with each other through a cable of the charging gun assembly 109.

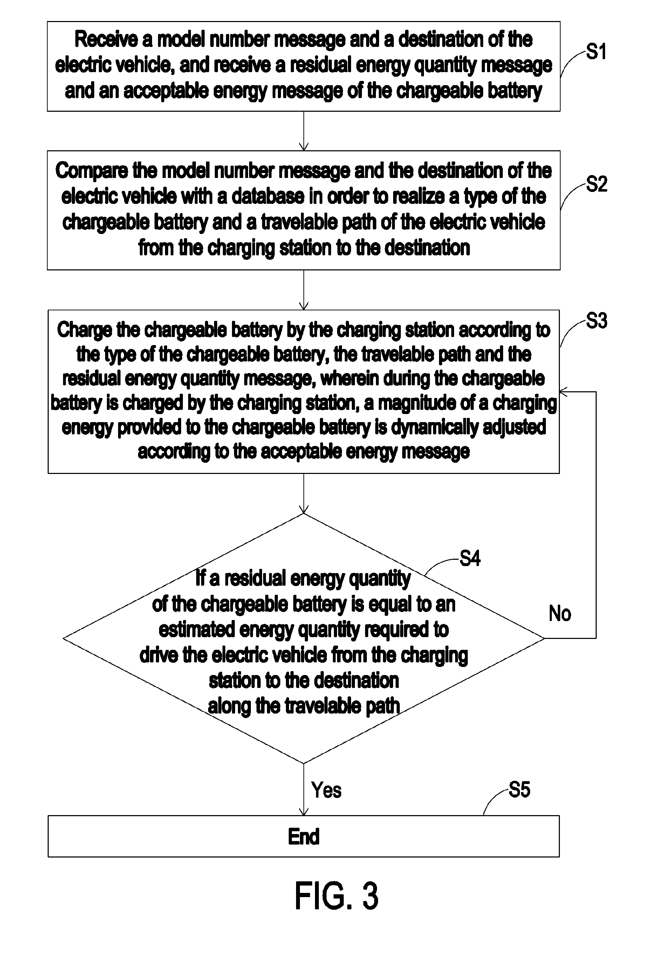

FIG. 3 is a schematic flowchart illustrating a charging method applied to the charging system of FIG. 1 or FIG. 2. First of all, a step S1 is performed to receive a model number message and a destination of the electric vehicle 9 and receive a residual energy quantity message and an acceptable energy message of the chargeable battery 90. For example, as shown in FIG. 1, the model number message and the destination of the electric vehicle 9 are inputted into the input unit 101 of the charging station 10 and provided to the controlling unit 103. Alternatively, as shown in FIG. 1, the model number message and the destination of the electric vehicle 9 are provided to the controlling unit 103 through the navigation device 91 of the electric vehicle 9 and the first communication interface 102 of the charging station 10. Alternatively, as shown in FIG. 1, the model number message and the destination of the electric vehicle 9 are provided to the controlling unit 103 through the network interface 107 of the charging station 10 via network connection so as to make an appointment. Alternatively, as shown in FIG. 2, the model number message and the destination of the electric vehicle 9 are inputted into the input unit 101 of the management device 20 and provided to the controlling unit 103 of the charging station 10 through the third communication interface 201 and the second communication interface 108. Moreover, the residual energy quantity message of the chargeable battery 90 and the acceptable energy message of the chargeable battery 90 are actively transmitted from the charging station 10 to the controlling unit 103 of the charging station 10 through the first communication interface 102 of the charging station 10.

Then, a step S2 is performed to compare the model number message and the destination of the electric vehicle 9 with a database, thereby acquiring a type of the chargeable battery 90 and a travelable path of the electric vehicle 9 from the charging station 10 to the destination. For example, the database is previously stored in the storage unit 104 of the charging station 10. Moreover, the step of comparing the model number message and the destination of the electric vehicle 9 with the database is controlled by the controlling unit 103 of the charging station 10.

Then, a step S3 is performed to charge the chargeable battery by the charging station according to the type of the chargeable battery 90, the travelable path and the residual energy quantity message. Moreover, during the chargeable battery is charged by the charging station, a magnitude of a charging energy provided to the chargeable battery 90 is dynamically adjusted according to the acceptable energy message. In this step, the controlling unit 103 of the charging station 10 controls the charging unit 100 of the charging station 10 to charge the chargeable battery 90 according to the type of the chargeable battery 90, the travelable path and the residual energy quantity message. Moreover, the magnitude of the charging energy provided to the chargeable battery 90 is dynamically adjusted by the controlling unit 103 according to the acceptable energy message.

Then, the step S4 is performed to judge whether a residual energy quantity of the chargeable battery 90 is equal to an estimated energy quantity required to drive the electric vehicle 9 from the charging station 10 to the destination along the travelable path. In an embodiment, the step S4 is performed by the controlling unit 103 of the charging station 10.

If the residual energy quantity of the chargeable battery 90 is equal to an estimated energy quantity required to drive the electric vehicle 9 from the charging station 10 to the destination along the travelable path, the step S5 is performed. That is, the charging task is ended. On the other hand, if the condition of the step S4 is not satisfied, the step S3 is performed again.

From the above descriptions, the present invention provides a charging system and a charging method for charging an electric vehicle. According to the present invention, the time period of charging the electric vehicle is determined according to the estimated energy quantity required to drive the electric vehicle 9 to the destination along the travelable path. When the residual energy quantity of the chargeable battery is equal to the estimated energy quantity required to drive the electric vehicle to the destination along the travelable path, the charging task is ended. As previously described in the prior art, the charging task is ended when the residual energy quantity of the chargeable battery of the electric vehicle is higher than 80%, or the time period of charging the electric vehicle is set by the driver. According to the present invention, the time period of charging the electric vehicle is reduced and substantially equal to what is actually needed.

## Claims

1. A charging system for an electric vehicle (9), comprising:
a charging station (10) configured for charging a chargeable battery (90) of said electric vehicle (9) and **characterized in that** said charging station comprises:
a charging unit (100) for providing a charging energy to said chargeable battery (90);
an input unit (101) for selectively receiving a model number message of said electric vehicle (9) and a destination of driving said electric vehicle (9);
a first communication interface (102) in communication with said electric vehicle (9) for receiving a residual energy quantity message and an acceptable energy message of said chargeable battery (90) from said electric vehicle (9) at any time; and
a controlling unit (103) electrically connected with said charging unit (100) for controlling operations of said charging unit (100), and connected with said input unit (101) and said first communication interface (102), wherein by comparing said model number message and said destination with a database, said controlling unit (103) realizes a type of said chargeable battery (90) and a travelable path of said electric vehicle (9) from said charging station (10) to said destination, wherein said controlling unit (103) controls said charging unit (100) to charge said chargeable battery (90) according to said type of said chargeable battery (90), said travelable path and said residual energy quantity message until a residual energy quantity of said chargeable battery (90) is equal to an estimated energy quantity required to drive said electric vehicle (9) to said destination along said travelable path, wherein during said chargeable battery (90) is charged by said charging unit (100), a magnitude of said charging energy is dynamically adjusted by said controlling unit (103) according to said acceptable energy message.

2. The charging system according to claim 1, wherein there are plural paths for allowing said electric vehicle (9) to drive from said charging station (10) to said destination, wherein said travelable path is said path having the farthest distance from said charging station (10).

3. The charging system according to claim 1, wherein said acceptable energy message varies with said residual energy quantity of said chargeable battery (90), and said acceptable energy message indicates the maximum chargeable electric energy corresponding to said residual energy quantity of said chargeable battery (90) at present.

4. The charging system according to claim 1, wherein said database contains data about a navigation map and said type of said chargeable battery (90) corresponding to said model number of said electric vehicle (9).

5. The charging system according to claim 1, wherein said charging station (10) further comprises a notification unit (106), which is electrically connected with said controlling unit (103), wherein when said electric vehicle (9) is charged by said charging unit (100), if said residual energy quantity of said chargeable battery (90) is equal to or higher than said estimated energy quantity required to drive said electric vehicle (9) to said destination along said travelable path, said notification unit (106) issues a notification signal.

6. A charging method for use in a charging system, said charging system comprising a charging station (10) for charging a chargeable battery (90) of an electric vehicle (9), **characterized in that** said charging method comprises steps of:
(a) receiving a model number message and a destination of said electric vehicle (9), and receiving a residual energy quantity message and an acceptable energy message of said chargeable battery (90);
(b) comparing said model number message and said destination with a database, thereby realizing a type of said chargeable battery (90) and a travelable path of said electric vehicle (9) from said charging station (10) to said destination;
(c) charging said chargeable battery (90) by said charging station (10) according to said type of said chargeable battery (90), said travelable path and said residual energy quantity message, wherein during said chargeable battery (90) is charged by said charging station (10), a magnitude of a charging energy provided to said chargeable battery (90) is dynamically adjusted according to said acceptable energy message; and
(d) judging whether a residual energy quantity of said chargeable battery (90) is equal to an estimated energy quantity required to drive said electric vehicle (9) to said destination along said travelable path; and
(e) if said residual energy quantity of said chargeable battery (90) is equal to said estimated energy quantity required to drive said electric vehicle (9) to said destination along said travelable path, said chargeable battery (90) no longer being charged by said charging station (10), and if said residual energy quantity of said chargeable battery (90) is lower than said estimated energy quantity required to drive said electric vehicle (9) to said destination along said travelable path, said step (c) being performed again.

7. The charging method according to claim 6, wherein in said step (a), said model number message and said destination of said electric vehicle (9) are inputted into an input unit (101) of said charging station (10) and provided to a controlling unit (103) of said charging station (10), or said model number message and said destination of said electric vehicle (9) are provided to said controlling unit (103) through a navigation device (91) of said electric vehicle (9) and a first communication interface (102) of said charging station (10) which is in communication with said electric vehicle (9), or said model number message and said destination of said electric vehicle (9) are provided to said controlling unit (103) through a network interface (107) of said charging station (10) via network connection so as to make an appointment.

8. The charging method according to claim 7, wherein in said step (c), said controlling unit (103) controls a charging unit (100) of said charging station (10) to charge said chargeable battery (90) according to said type of said chargeable battery (90), said travelable path and said residual energy quantity message, and said magnitude of said charging energy provided to said chargeable battery (90) is dynamically adjusted by said controlling unit (103) according to said acceptable energy message.

9. The charging method according to claim 6, wherein in said step (b), said database is previously stored in a storage unit (104) of said charging station (10), wherein said database contains data about a navigation map and said type of said chargeable battery (90) corresponding to said model number of said electric vehicle (9).

10. The charging method according to claim 6, wherein said charging system (10) further comprises a management device (20) for controlling operations of said charging station (10), and said charging station (10) further comprises a second communication interface (108), wherein said management device (20) comprises an input unit (101) and a third communication interface (201) in communication with said second communication interface (108), wherein in said step (a), said model number message and said destination are inputted via said input unit (101) and transmitted to a controlling unit (103) of said charging station (10) through said third communication interface (201) and said second communication interface (108).
